# EUROPÄISCHE PATENTSCHRIFT

(11) **EP 3 250 340 B1**
(45) Veröffentlichungstag und Bekanntmachung des Hinweises auf die Patenterteilung: **03.11.2021**
(21) Anmeldenummer: 16702372.0
(22) Anmeldetag: 26.01.2016
(51) Int. Cl.: B23Q 1/48, B23Q 5/027, B23Q 11/00, B06B 3/00, B23B 29/12, B23B 37/00, B24B 1/04

(54) **SPINDELANORDNUNG**
SPINDLE ARRANGEMENT
ENSEMBLE BROCHE

(30) Priorität: 27.01.2015 DE 102015101167
(43) Veröffentlichungstag der Anmeldung: 06.12.2017
(73) Patentinhaber: TECHNISCHE UNIVERSITÄT WIEN, 1040 Wien (AT)
(72) Erfinder: BLEICHER, Friedrich, 1030 Wien (AT); HABERSOHN, Christoph, 1030 Wien (AT); FUCHS, Martin, 1030 Wien (AT)
(74) Vertreter: Winter, Brandl - Partnerschaft mbB
(86) Internationale Anmeldenummer: PCT/EP2016/051579
(87) Internationale Veröffentlichungsnummer: WO 2016/120274

(56) Entgegenhaltungen:
- EP-A1- 1 669 148
- EP-A2- 0 849 038
- WO-A1-93/25352
- WO-A1-2013/142890
- DE-A1- 19 810 996
- US-A1- 2008 019 782

## Beschreibung

Die Erfindung betrifft eine Spindelanordnung für eine Werkzeugmaschine gemäß dem Oberbegriff des Patentanspruchs 1 (siehe z.B. WO 2013/142890 A1).

Derartige Spindelanordnungen werden zur schwingungsunterstützenden Zerspanung von Werkstücken eingesetzt und arbeiten in den meisten Fällen im hochfrequenten Bereich von mehreren kHz, wobei die Schwingungsamplituden im Bereich von wenigen Mikrometern liegen. Durch die Schwingungsüberlagerung mit dem Vorschub bei der Zerspanung kann im Regelfall eine gesteigerte Produktivität durch verbesserten Spanbruch sowie begünstigten Späneabtransport und eine höhere Werkzeugstandzeit durch verbesserte Kühlschmierstoffzuführung erreicht werden. Zudem ermöglicht die schwingungsüberlagerte Fertigung ein Zerspanen von schwierig zu bearbeitenden Werkstoffen mittels Standardwerkzeugen. Eine derartige Zerspanung ist in herkömmlicher Weise nur mit Spezialwerkzeugen möglich. Hierzu sei insbesondere auf die Bearbeitung von Kohlefaserverbundwerkstoffen (CFK) verwiesen.

Bei bekannten Lösungen zur schwingungsunterstützten Bearbeitung werden die Schwingungen entweder werkzeugseitig oder werkstückseitig eingekoppelt.

So zeigt die EP 2 709 796 B1 der Anmelderin eine mit einer Schwingvorrichtung ausgeführte Werkstückaufnahme, über die das Werkstück bei der Bearbeitung mit einer Schwingung beaufschlagt werden kann, wobei diese Schwingung unterhalb des Ultraschallbereichs liegt.

In der DE 10 2010 048 636 A1 ist eine Werkzeugmaschine beschrieben, bei der sowohl ein Werkstückträger als auch ein Werkzeughalter über Vibrationseinheiten zur schwingungsunterstützten Bearbeitung (hybride Bearbeitung) mit Schwingungen im Bereich von mehr als 5 kHz beaufschlagt werden kann.

Mit der WO 2013/142890 A1 der Anmelderin wird eine hybride Bearbeitung von Werkstücken erläutert, bei der ein Werkzeug zur Zerspanung eines Werkstücks mit einer Schwingvorrichtung ausgeführt ist, über die die Werkzeugschneide mit einer Schwingung in einem Frequenzbereich unterhalb des Ultraschalls beaufschlagt werden kann. Die Schwingvorrichtung ist mit einer Ausgleichsmasse ausgeführt, die gegengleich zu der Schwingung der Werkzeugschneide schwingt, so dass eine Impulsentkopplung erfolgt und somit unabhängig von der Eigenfrequenz der Vorrichtung die gewünschte Bearbeitungsfrequenz einstellbar ist.

Auch in den Druckschriften WO 2006/0222592 A2 und EP 1 669 148 A1 werden Werkzeugeinheiten beschrieben, bei denen ein Werkzeug zur hybriden Bearbeitung von Werkstücken mit Schwingungen im Ultraschallbereich beaufschlagt werden kann.

Die DE 10 2005 052 721 A1 zeigt eine Vorrichtung zur schwingungsunterstützten Bearbeitung von Werkstücken, bei der eine Spindel mittels eines mechanischen Nockenantriebs in Z-Richtung in Schwingungen versetzt werden kann.

Problematisch bei einer derartigen Lösung ist, dass durch die Hin- und Herbewegung der Spindel Schwingungen in die Maschinenstruktur der Werkzeugmaschine eingeleitet werden können. Vor allem bei Wälzkörperlagerungen können die über derartige Schwingungen in die Maschinenstruktur eingeleiteten Kraftanteile zu Defekten und Ausfällen führen. Darüber hinaus wird durch die Schwingungen die Bahngenauigkeit der Maschine verringert und somit der Positionierfehler um die Bewegungsachse vergrößert.

Die WO 93/25352 A1 offenbart eine Handwerkzeugmaschine mit einer Ausgleichseinrichtung zur Schwingungskompensation.

Dem gegenüber liegt der Erfindung die Aufgabe zugrunde, eine Spindelanordnung für eine Werkzeugmaschine zu schaffen, mit der die Bearbeitungsgenauigkeit verbessert ist.

Diese Aufgabe wird durch eine Spindelanordnung mit den Merkmalen des Patentanspruchs 1 gelöst.

Vorteilhafte Weiterbildungen der Erfindung sind Gegenstand der Unteransprüche.

Erfindungsgemäß weist die Spindelanordnung für eine Werkzeugmaschine eine Werkzeugspindel zum Antreiben eines Werkzeugs und einen Aktuator oder eine Aktuatoranordnung zur Schwingungsanregung dieses Werkzeugs oder der Werkzeugspindel auf. Die Spindelanordnung ist mit einer Ausgleichseinrichtung zur zumindest teilweisen Kompensation der durch die Schwingungsanregung erzeugten Trägheitskräfte im Spindelbereich ausgeführt.

Zum Impulsausgleich radialer Schwingungen ist eine ringförmige, mit der Spindel in Wirkverbindung stehende, Ausgleichsmasse vorgesehen, die die Spindel umgreift und über zumindest einen weiteren Aktuator, vorzugsweise zwei gegenüberliegende Aktuatoren angetrieben ist.

Mit anderen Worten gesagt, über diese Ausgleichseinrichtung erfolgt eine aktive Impulsentkopplung in zumindest zwei Achsen der Werkzeugmaschine, so dass sich die Spindelanordnung trotz der Schwingungsanregung nach außen, d. h., zur Maschinenstruktur hin wie eine herkömmliche Standardspindel verhält. Die auf das Werkzeug und das Werkstück während der hybriden Bearbeitung wirkenden Schwingungen werden aufgrund dieser Impulsentkopplung nicht in die Maschinenstruktur eingeleitet, so dass durch diesen Schwingungsausgleich zum Einen die Maschinenstruktur entlastet und zum Anderen die Positioniergenauigkeit gegenüber herkömmlichen Lösungen deutlich erhöht wird. Neben den im Regelfall verbesserten Prozessparametern steigt bei der hybriden Zerspanung auch die Standzeit der Werkzeuge.

Bei einem bevorzugten Ausführungsbeispiel der Erfindung hat die Ausgleichseinrichtung eine Ausgleichsmasse, die gegengleich zu der auf das Werkzeug übertragenen Schwingung angetrieben ist.

Die Impulsentkopplung ist optimal, wenn die Schwingmassen der Spindel des Werkzeugs und der Ausgleichsmasse, deren Schwingungsfrequenzen sowie deren Schwingungsamplituden so aufeinander abgestimmt sind, dass sich die gegenläufig wirkenden Trägheitskräfte im Wesentlichen aufheben.

Erfindungsgemäß wird es bevorzugt, wenn die Schwingungsfrequenz geringer als 1 kHz, vorzugsweise etwa im Bereich von 200 Hz liegt. Derartige Schwingungsfrequenzen liegen deutlich unterhalb des Ultraschallbereichs und ermöglichen die Realisierung von vergleichsweise großen Schwingungsamplituden im Bereich von 0,05 mm bis 1 mm, vorzugsweise im Bereich von 0,1 mm bis 0,5 mm.

Bei einem Ausführungsbeispiel der Erfindung ist der Aktuator so ausgeführt, dass eine Schwingungsanregung in zwei oder drei Achsen ermöglicht ist. D. h., es können unterschiedliche Aktuatoren für die jeweilige Schwingungsbeaufschlagung vorgesehen werden.

Der vorrichtungstechnische Aufwand zur Realisierung der Spindelanordnung ist minimal, wenn der Aktuator auch die Ausgleichsmasse antreibt. Dabei kann es vorgesehen werden, dass eine derartige Ausgleichsmasse nur in der Hauptachse, üblicherweise der Z-Achse, vorgesehen ist, während bei den Schwingungsrichtungen in den weiteren Achsen (X-, Y-Achse) keine Ausgleichsmasse erforderlich ist.

Bei einem Ausführungsbeispiel der Erfindung wird die Spindel über zwei die Schwingung ermöglichende Lager abgestützt.

Zur Minimierung der Schwingmasse der Spindel kann der vorrichtungstechnische Aufwand verringert werden, in dem lediglich ein die Werkzeugaufnahme antreibender Rotor der Spindel mit der Schwingung beaufschlagt ist, so dass die schwingende Masse der Spindel gegenüber der vorbeschriebenen Lösung reduziert ist und somit ein geringerer Energiebedarf für die Bewegung notwendig ist und zudem auch die Dynamik des Systems verbessert wird.

Vorzugsweise ist die Spindelanordnung mit einem weiteren Lager ausgeführt, das im Ankoppelbereich der Spindel bzw. des Rotors an den Aktuator vorgesehen ist.

Die vorgenannten Lager können beispielsweise als Luftlager oder Festkörperelemente insbesondere Membranlager ausgeführt sein. Dabei kann es ausreichend sein, wenn das Luftlager lediglich werkstückseitig vorgesehen ist.

Die Spindelanordnung lässt sich sehr kompakt ausbilden, wenn auch der oder die Aktuatoren in ein Spindelgehäuse der Spindel integriert sind.

Bei einem relativ einfach aufgebauten Ausführungsbeispiel erfolgt die Schwingungsübertragung zwischen dem Aktuator und der Spindel extern über ein Antriebsgestänge.

Über geeignete Auslegung der schwingenden Bauelemente, vorzugsweise der Lager und der Schwingungsparameter (Amplitude, Frequenz) kann das gesamte Spindelsystem zu einer Schwingung im Eigenfrequenzbereich angeregt werden, so dass der Energiebedarf zur Schwingungserzeugung minimal ist.

Zerspanungsparameter sind so zu wählen, dass eine Anregung der Maschinenstruktur in ihrer Eigenfrequenz vermieden wird.

Die Aktuatoren für die Schwingungsanregung können hydraulisch, mechanisch oder elektrisch angetrieben sein. Prinzipiell sind alle Schwingungsaktuatoren einsetzbar, wie sie in dem eingangs beschriebenen Stand der Technik erläutert sind.

Bevorzugte Ausführungsbeispiele der Erfindung werden im Folgenden anhand schematischer Zeichnungen näher erläutert. Es zeigen:
Figur 1 ein Prinzipschaubild eines ersten Ausführungsbeispiels einer erfindungsgemäßen Spindelanordnung mit Impulsentkopplung;
Figur 2 eine nicht zur Erfindung gehörende Variante des Ausführungsbeispiels gemäß Figur 1;
Figur 3 eine konkrete Lösung des Ausführungsbeispiels gemäß Figur 2;
Figur 4 die Spindelanordnung gemäß Figur 3 mit abgenommener Schutzabdeckung;
Figur 5 eine vereinfachte Schnittdarstellung der Spindelanordnung gemäß Figur 4;
Figur 6 eine werkzeugseitige Lagerung der Spindelanordnung und
Figur 7a, 7b Prinzipdarstellungen der Spindellagerung mit im Hinblick auf Resonanzeffekte unterschiedlich abgestimmten Membranlagern.

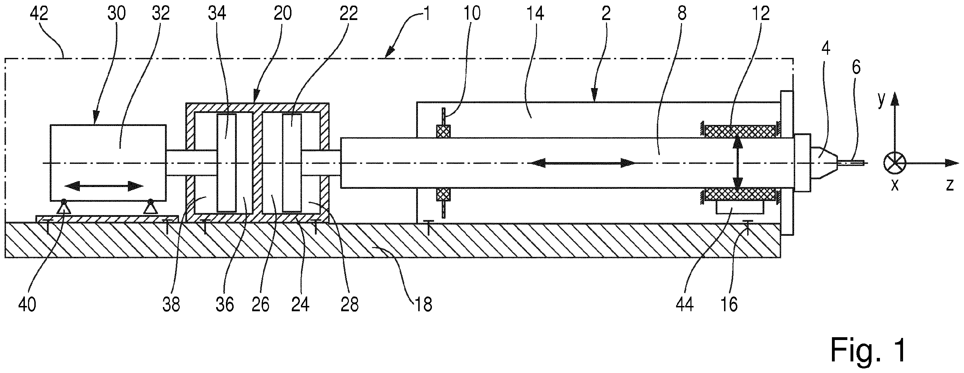

Figur 1 zeigt ein erstes Ausführungsbeispiel einer Spindelanordnung 1 einer Werkzeugmaschine, die beispielsweise zum Fräsen, Schleifen, Bohren oder einer sonstigen zerspanenden Bearbeitung verwendet werden kann. Die Spindelanordnung 1 hat eine Spindel 2 mit im Wesentlichen bekanntem Aufbau, an der üblicherweise eine Spannvorrichtung für eine Werkzeugaufnahme 4 ausgebildet ist, die ein Werkzeug 6, beispielsweise einen Fräser trägt.

Die Spindelanordnung 1 ist über geeignete Linearführungen an einer Maschinenstruktur der Werkzeugmaschine geführt und lässt sich zumindest entlang der dargestellten Achsen x, y und z gegenüber der Bearbeitungsstelle verstellen. Bei der Prinzipdarstellung gemäß Figur 1 ist ein elektrischer Antrieb der Spindel 2 und die Kühl-Schmiermittelversorgung des Werkzeugs 6 nicht dargestellt.

Ein die Werkzeugaufnahme 4 tragender Rotor 8 der Spindel ist über zwei Spindellager in einem Spindelgehäuse 14 gelagert. Beim dargestellten Ausführungsbeispiel ist das in Figur 1 linke Spindellager zusätzlich als Festkörperelement, im vorliegenden Fall als Membranlager 10 ausgeführt. Das werkzeugseitige Lager ist ein Luftlager 12. Das im Folgenden noch näher erläuterte Membranlager 10 erlaubt eine Schwingungsbewegung des Rotors 8 in z-Richtung. Die Spindel 2 ist über das Spindelgehäuse 14 in an sich bekannter Weise über Befestigungselemente 16 mit der Maschinenstruktur 18 verbunden.

Die Schwingungsanregung des Rotors 8 in z-Richtung erfolgt mittels eines Aktuators 20, der beim dargestellten Ausführungsbeispiel als hydraulischer Aktuator ausgeführt ist. Selbstverständlich können auch andere Aktuatoren, wie beispielsweise elektromechanische, pneumatische oder mechanische Aktuatoren zur Schwingungsanregung verwendet werden. Die Schwingungsfrequenz ist beim dargestellten Ausführungsbeispiel relativ niederfrequent ausgelegt. Vorzugsweise soll die Frequenz im Bereich von weniger als 1000 Hz vorzugsweise bei etwa 200 Hz liegen. Die über den Aktuator 20 generierbare Schwingungsamplitude liegt vorzugsweise im Bereich zwischen 0,1 mm bis 0,5 mm.

Beim dargestellten Ausführungsbeispiel ist der Rotor 8 in Axialrichtung über das Spindelgehäuse 14 hinaus verlängert und mit einem Kolben 22 des Aktuators 20 verbunden. Der Kolben 22 ist in einem Zylindergehäuse 24 geführt und bildet mit diesem zwei Druckräume 26, 28, die über nicht dargestellte Servoventile wechselnd mit einer Druckmittelquelle und mit einer Druckmittelsenke verbindbar sind, um den Rotor 8 in die gewünschte Schwingung zu versetzen. Das Zylindergehäuse 24 ist koaxial zur Spindel 2 an der Maschinenstruktur 18 festgelegt.

Erfindungsgemäß ist der Aktuator 20 mit einer Ausgleichseinrichtung 30 ausgeführt. Diese hat eine Ausgleichsmasse 32, die gegengleich zur Schwingung des Rotors 8 zu Schwingungen angeregt wird. Beim dargestellten Ausführungsbeispiel ist die Ausgleichsmasse 32 mit einem Ausgleichskolben 34 verbunden, der ebenfalls im Zylindergehäuse 24 geführt ist und mit diesem weitere Druckräume 36, 38 begrenzt, die ebenfalls mit der Druckmittelquelle bzw. der Druckmittelsenke verbindbar sind. Dabei werden die beiden benachbarten Druckräume 26, 36 über die Servoventile beispielsweise zeitgleich mit der Druckmittelquelle verbunden, während die im Zylindergehäuse 24 außen liegenden Druckräume 28, 38 gleichzeitig über die Servoventile zur Druckmittelsenke entlastet werden, so dass die Ausgleichsmasse 32 und die Spindel 8 gegengleich schwingen. Die Schwingmasse der Ausgleichsmasse 32 und diejenige der Spindel 8 sind aufeinander abgestimmt, so dass bei gleicher Schwingungsfrequenz eine aktive Impulsentkopplung erfolgt.

Aufgrund dieser Neutralisation der Trägheitskräfte der Spindel 2 oder genauer gesagt des Rotors 8 werden die Schwingungen über das Werkzeug 6 alleine in das nicht dargestellte Werkstück und nicht in die Maschinenstruktur 18 eingeleitet.

Die Ausgleichsmasse 32 ist in geeigneter Weise über ein eine Schwingung in z-Richtung zulassendes Ausgleichslager 40 geführt. Die gesamte Spindelanordnung 1 kann dann über eine Abdeckung 42 nach außen hin abgedeckt sein.

Selbstverständlich kann diese Spindelanordnung 1 auch in einem gemeinsamen Gehäuse angeordnet sein, das dann an der Maschinenstruktur, beispielsweise am Maschinenbett befestigt wird. Etwas abweichend von dem in Figur 1 dargestellten Konzept ist es bevorzugt, wenn der Aktuator 20 mit der Ausgleichseinrichtung 30 in das Spindelgehäuse 14 integriert sind, wobei die Abmessungen nicht deutlich über denjenigen einer Standardspindel liegen sollen. Das heißt, die eingetopfte Spindelanordnung verhält sich nach außen hin ähnlich wie eine Standardspindel, wobei aufgrund der Impulsentkopplungen Schwingungen nicht in die Maschinenstruktur eingeleitet werden.

Die Schwingungsanregung in Radialrichtung erfolgt über geeignete weitere Aktuatoren 44. Die Steuerung der Spindelanordnung 8 ist dabei so ausgelegt, dass ― je nach Fertigungsauftrag ― eine Schwingung in unterschiedlichen Achsrichtungen oder in Kombinationen dieser Achsrichtungen erfolgen kann. Prinzipiell ist auch in der radialen Schwingung ein Impulsausgleich möglich. So könnte man beispielsweise im Bereich des Aktuators 44 eine ringförmige Masse vorsehen, über die die Impulsausgleichsbewegung erfolgt. Diese Masse kann die Spindel konzentrisch umgreifen, wobei man diese Masse dann beispielsweise zwei diametral angeordnete Aktuatoren zuordnen kann, über die die ringförmige Masse relativ zur Spindel bewegt wird.

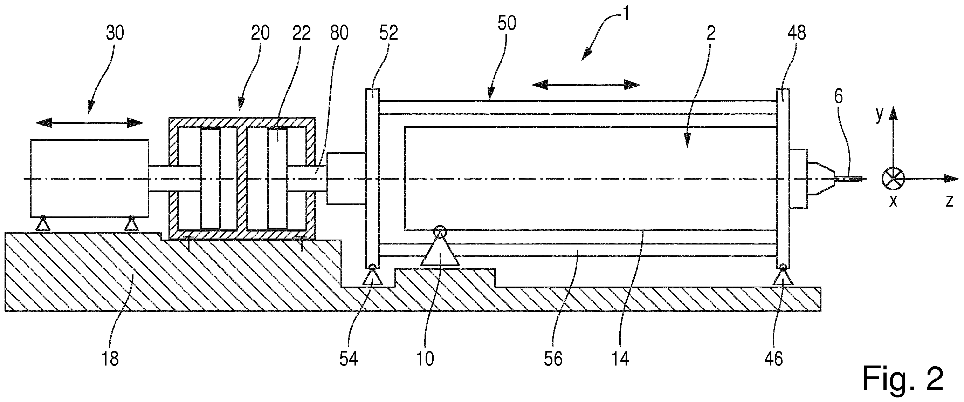

Figur 2 zeigt ein etwas vereinfachtes Beispiel, bei dem die gesamte Spindel 2 zu Schwingungen angeregt wird. Dabei erfolgt die Schwingungsanregung lediglich in z-Richtung - eine erfindungsgemäße radiale Schwingungsanregung ist nicht vorgesehen.

Bei diesem dargestellten Beispiel handelt es sich im Prinzip um eine Standardspindel, die über zwei Spindellager, im vorliegenden Fall zwei Membranlager 10, 46 an der Maschinenstruktur 18 gelagert sind. Diese Membranlager 10, 46 erlauben eine Schwingung der Spindel 2 in z-Richtung. Die Verwendung einer Standardspindel 2 verringert zwar den vorrichtungstechnischen Aufwand, hat jedoch gegenüber der eingangs beschriebenen Lösung den Nachteil, dass die schwingende Masse deutlich größer als bei dem Ausführungsbeispiel gemäß Figur 1 ist, so dass der Energiebedarf zur Generierung der Schwingung entsprechend groß ist und auch die zu kompensierenden Trägheitskräfte erhöht werden.

Dennoch kann es für einfachere Fertigungsaufgaben hinreichend sein, die Spindelanordnung 1 gemäß Figur 2 auszuführen. Die Spindel 2 ist werkzeugseitig mit einem Stirnflansch 48 ausgeführt, der über ein Antriebsgestänge 50 mit einem rückseitigen Flansch 52 verbunden ist, der seinerseits über ein weiteres Lager, im vorliegenden Fall ebenfalls ein Membranlager 54 an der Maschinenstruktur 18 geführt ist. Dieser Flansch 52 steht in Verbindung mit dem Kolben 22 des Aktuators 20, so dass die von diesem generierten Schwingungen über den Flansch 52, das Antriebsgestänge 50 und den Stirnflansch 48 auf die Spindel 2 übertragen werden.

Die Kompensation der Trägheitskräfte erfolgt wiederum über eine Ausgleichseinrichtung 30. Der Grundaufbau des Aktuators 20 und der Ausgleichseinrichtung 30 entspricht demjenigen aus Figur 1, so dass hinsichtlich des Aufbaus auf diese Beschreibung verwiesen wird. Das Antriebsgestänge 50 hat mehrere sich zwischen den Flanschen 48, 52 erstreckende Übertragungsstreben 56, die in Parallelabstand zur Spindelachse und zum Spindelgehäuse 14 verlaufen.

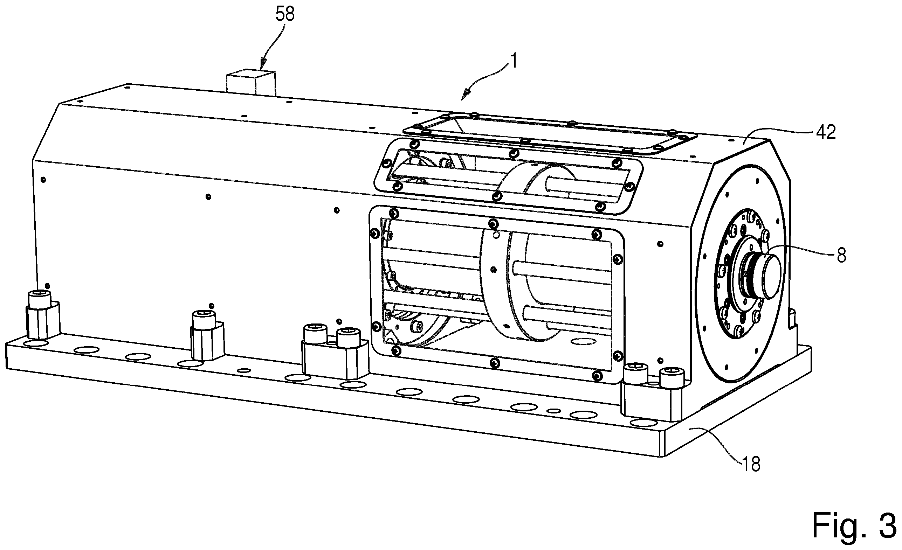

Anhand der Figuren 3 bis 7 wird der prinzipielle Aufbau der Spindelanordnung 1 erläutert, wobei der Einfachheit halber der die Ausgleichseinrichtung 30 betreffende Teil nicht dargestellt ist. Figur 3 zeigt dabei die Spindelanordnung 1 im Montagezustand, wobei die eigentliche Spindel von der Abdeckung 42 überdeckt ist. Die Spindelanordnung 1 ist mit der angedeuteten Maschinenstruktur 18 verschraubt. In dieser Darstellung ist noch keine Werkzeugaufnahme 4 an den auskragenden Teil des Rotors 8 angesetzt. Angedeutet in Figur 3 ist auch ein Teil eines Steuerblocks 58, in den die Servoventile zur Ansteuerung des Aktuators 20 und der Ausgleichseinrichtung 30 integriert sind.

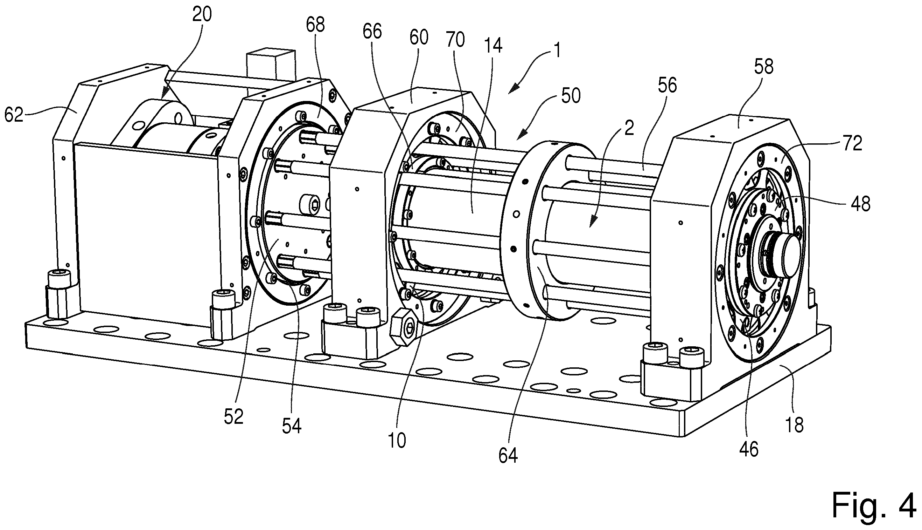

Figur 4 zeigt die Spindelanordnung 1 bei abgenommener Abdeckung 42. Man erkennt in dieser Darstellung die als Standardspindel ausgeführte Spindel 2, die über zwei Lagerböcke 58, 60 an der Maschinenstruktur 18 festgelegt ist.

Die Spindel 2 ist in der anhand Figur 2 erläuterten Weise mit dem Aktuator 20 und der Ausgleichseinrichtung (nicht dargestellt) verbunden. Letzterer ist in einer Umhausung 62 angeordnet, an der auch der Flansch 52 befestigt ist.

Wie vorstehend erläutert, ist dieser Flansch 52 über das Antriebsgestänge 50 mit den Übertragungsstreben 56 mit dem werkzeugseitigen Stirnflansch 48 verbunden. Andererseits steht der Stirnflansch 52 in Wirkverbindung mit dem hydraulischen Aktuator 20. Gemäß Figur 4 durchsetzen die die Spindel 2 umgreifenden Antriebsstreben 56 einen Führungsring 64, der das Gehäuse 14 der Spindel 2 umgreift.

Die Spindel ist in den beiden mit der Maschinenstruktur 18 verbundenen Lagerböcken 58, 60 über geeignete Lager, im vorliegenden Fall die beiden Membranlager 10, 46 gelagert, die im Bereich des Stirnflanschs 48 bzw. eines weiteren Spindelflanschs 66 mit der Spindel 2 verbunden sind.

Die Lagerung des aktuatorseitigen Flansches 52 in der Umhausung 62 erfolgt über das oben beschriebene weitere Membranlager 54, das in der Darstellung gemäß

Figur 4 weitestgehend von einem Befestigungsring 68 überdeckt ist.

Über ähnliche Befestigungsringe 70, 72 erfolgt auch die Festlegung der Membranlager 46, 10 in den Lagerböcken 58 bzw. 60. Die Membranlager 10, 46, 54 erlauben - wie erläutert - eine Schwingungsbewegung in z-Richtung und sind jedoch in Radialrichtung äußerst steif ausgebildet, so dass die Bahngenauigkeit der Werkzeugmaschine nicht beeinträchtigt ist.

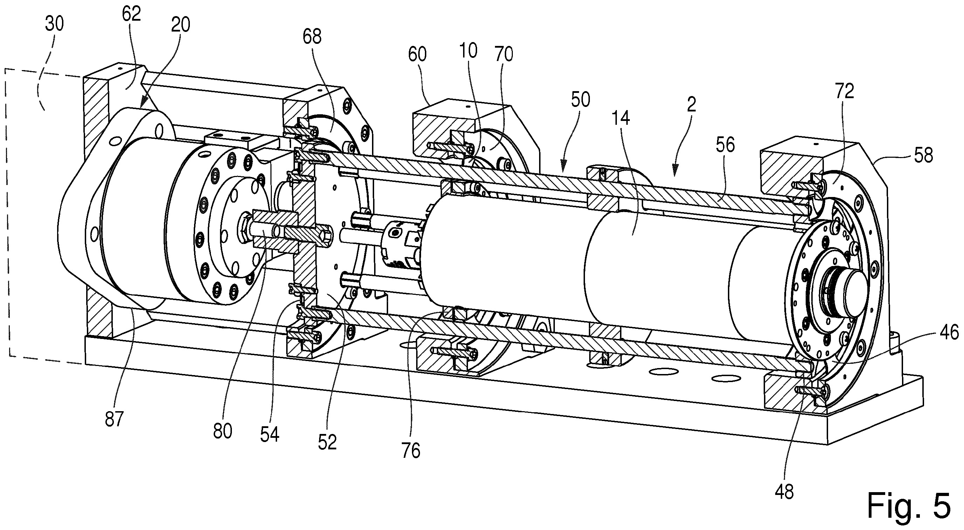

Weitere Einzelheiten werden anhand der Figuren 5 bis 7 erläutert.

Figur 5 zeigt einen Längsschnitt durch die Spindelanordnung 1 gemäß Figur 4. Dem gemäß hat die eigentliche Spindel 2 einen im Wesentlichen herkömmlichen Aufbau. Da ein derartiger Spindelaufbau im Prinzip bekannt ist, kann unter Verweis auf die diesbezügliche Fachliteratur auf eine weitere Erläuterung verzichtet werden.

Im Bereich der beiden Lagerböcke 58, 60 ist am Außenumfang des Spindelgehäuses 14 ein Befestigungsflansch 76 beziehungsweise der Stirnflansch 48 vorgesehen, über die jeweils der ringförmige Innenteil der jeweiligen Membranlager 10, 46 festgespannt wird. Das weitere Membranlager 54 ist mit seinem ringförmigen Innenteil mit einer entsprechenden Aufnahme des Flanschs 52 verbunden. Ein außen liegender Ring der Membranlager 54, 10, 46 ist dann über die genannten Befestigungsringe 68, 70, 72 mit der Umhausung 62 des hydraulischen Aktuators 20 bzw. den Lagerböcken 60, 58 verbunden, so dass die Spindel 2 in Radialrichtung exakt geführt ist und eine Schwingung in z-Richtung ermöglicht ist.

Wie erläutert, ist der Aktuator 20 beim dargestellten Beispiel hydraulisch betätigt. Eine Kolbenstange 80 (siehe auch Figur 2) eines Kolbens des Aktuators ist mit dem Flansch 52 verbunden, so dass die über den Aktuator 20 generierten Schwingungen über das Antriebsgestänge 50 mit den Übertragungsstreben 56 und den Stirnflansch 48 auf das Spindelgehäuse 14 übertragen wird. Wie in Figur 5 gestrichelt angedeutet, steht der Aktuator 20 in Wirkverbindung mit der Ausgleichseinrichtung 30, so dass ein aktiver Impulsausgleich und somit eine Kompensation der über die Schwingung der Spindel 2 eingeleiteten Trägheitskräfte ermöglicht ist. Der hydraulische Aktuator 20 ist beim Beispiel gemäß Figur 5 über eine Konsole 87 in z-Richtung mit der Umhausung 62 verschraubt.

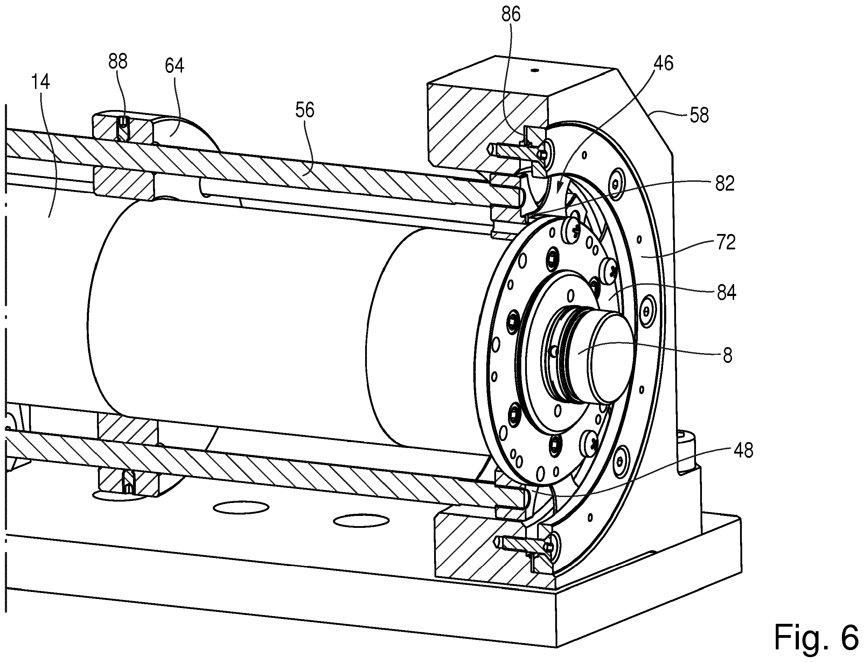

Figur 6 zeigt eine vergrößerte Darstellung des im Bereich des Lagerbocks 58 ausgebildeten Teils der Spindelanordnung 1. In dieser Darstellung gut sichtbar ist die Anbindung des Stirnflansches 48 an den Flansch des Spindelgehäuses 14 und die Klemmung eines Innenrings 82 und des Membranlagers 46. Ein Außenring 86 des in etwa topfförmig ausgebildeten Membranlagers 46 ist über den Befestigungsring 72 am Lagerbock 58 festgelegt, wobei der Befestigungsring 72 in eine entsprechende Rückstufung des Lagerbocks 58 eintaucht. Die Befestigung der anderen Membranlager 10, 54 erfolgt entsprechend.

Gemäß der Darstellung in Figur 6 umgreift der Führungsring 64 das Spindelgehäuse 14 und ist an den Übertragungsstreben 56 beispielsweise über Klemmschrauben 88 festgelegt, so dass diese untereinander verbunden sind. Eine Verbindung des Führungsrings 64 mit dem Spindelgehäuse 14 erfolgt nicht, so dass die Schwingung direkt in den werkzeugseitigen Teil des Gehäuses 14 eingeleitet wird.

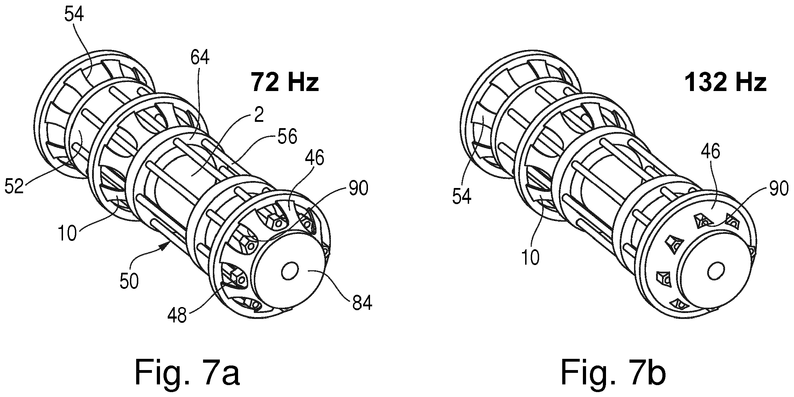

Die Figuren 7a, 7b zeigen den prinzipiellen Grundaufbau des Schwingungssystems mit der in z-Richtung über den Aktuator (hier nicht gezeigt) zu Schwingungen anregbaren Spindel 2, die über die zwei vorbeschriebenen Membranlager 10, 46 aufgehängt/gelagert ist. Die Schwingungsübertragung erfolgt durch Anregung des aktuatorseitigen Flansches 52, der über das Membranlager 54 gelagert ist. Wie erläutert, werden die Schwingungen dann über das Antriebsgestänge 50 und den Stirnflansch 48 in die Spindel 2 eingeleitet. Bei diesem Beispiel sind die Übertragungsstreben 56 über zwei Führungsringe 64 miteinander verbunden.

Die Schwingungsfrequenz der Spindel 2 liegt im Bereich unter 1000 Hz, wobei die Eigenfrequenz der Anordnung ausgenutzt wird, um die angeregte Schwingung im Bereich der Eigenfrequenz zu unterstützen.

So sind bei dem in Figur 7a dargestellten Beispiel die drei Membranlager 10, 54, 46 nicht durchgehend topfförmig ausgebildet sondern mit einer Vielzahl von Ausnehmungen 90 ausgeführt, wobei durch geeignete Geometrie und Größe der Ausnehmungen 90 sowie der Membranstärke die Eigenfrequenz der Membranen einstellbar ist. Das in Figur 7a dargestellte Beispiel hat vergleichsweise großflächige Ausnehmungen 90, so dass die Eigenfrequenz des Aufbaus relativ niedrig, beispielsweise etwa im Bereich von 72 Hz liegt. Bei dem in Figur 7b dargestellten Beispiel sind die Ausnehmungen 90 des Membranlagers 46 gegenüber dem Beispiel gemäß Figur 7a deutlich verkleinert, so dass die Eigenfrequenz des Aufbaus höher, beispielsweise im Bereich von 132 Hz liegt. Bei der Variante gemäß Figur 7b sind die Ausnehmungen der anderen Lagermembranen 10, 54 unverändert. Selbstverständlich kann auch die Geometrie dieser Membranlager zur Anpassung der Eigenfrequenz des Lagersystems variiert werden. Auf diese Weise ist es möglich, durch geeignete Auslegung der Spindelaufhängung und der Amplitude und Frequenz des Aktuators sowie der Schwingmasse der Ausgleichseinrichtung 30 die Schwingung in den Bereich der Eigenfrequenz der Spindelanordnung 1 zu legen, so dass die Energie für die Schwingungserregung minimal ist.

Durch die gegengleich schwingende Ausgleichsmasse 32 oder entsprechende Ausgleichseinrichtungen wird ein Einleiten der Schwingungen in die Maschinenstruktur zuverlässig verhindert, so dass die Bahngenauigkeit gegenüber herkömmlichen Lösungen deutlich erhöht ist. Dennoch sollte ein Augenmerk darauf gerichtet werden, dass bei der Bearbeitung Prozessparameter gewählt werden, die keine Anregung der Maschinenstruktur in deren Eigenfrequenz hervorrufen.

Die beim Ausführungsbeispiel gemäß Figur 1 mögliche Einleitung von Schwingungen in allen drei Hauptachseinrichtungen der Werkzeugmaschine erlaubt es, flexibel auf die zu fertigenden Werkzeugstücke zu reagieren. So ist es beispielsweise beim Bohren ausreichend, die Schwingungen lediglich entlang der Z-Achse (Spindellängsachse) einzuleiten. Ergänzend ermöglicht eine Schwingung in der X- und Y-Richtung eine helikale Bohrungsbearbeitung. Beim Fräsen einer Tasche oder dergleichen wird hingegen eine Schwingung in X- und Y-Richtung bevorzugt, so dass eine trochoide Bearbeitung erfolgt.

Bei dem Ausführungsbeispiel gemäß Figur 1 ist die Schwingung in der X- und Y-Richtung im Wesentlichen in den Bereich des werkzeugseitigen Lagerbocks 58 integriert. Die Verwendung eines Luftlagers 12 in diesem Bereich hat den Vorteil eines geringen Reibbeiwerts und lässt zusätzlich eine Bewegung in axialer Richtung zu. Die Schwingung in Z-Richtung wird durch die Resonanzfrequenz der aktuatorseitigen Lageraufhängung (Membranlager 10) unterstützt.

Die Effekte einer Schwingungsüberlagerung ermöglichen eine effizientere Versorgung der Schneidkanten des Werkzeugs 6 mit Kühlschmierstoff, das Ausspülen von Spänen, wobei der intermittierende Schneideneingriff bei effektiv höheren Spanungsdicken zu einer signifikanten Verbesserung des Zerspanungsvorgangs führt. Insbesondere große Schwingungsamplituden im Bereich von mehr als 0,1 mm sollen ein Spaltmaß zwischen Werkstück und Schneide realisieren, wodurch eine turbulente Strömung des Kühlschmierstoffstroms entsteht. Dieser Effekt verbessert die Kühlschmierung der Schneide und reduziert den Werkzeugverschleiß. Beispielsweise bei der Bearbeitung von Faserverbundmaterialien wird dadurch einer Schädigung der Kunststoffmatrix vorgebeugt.

Zusätzlich kann eine signifikante Verbesserung im Standzeitverhalten der Werkzeuge festgestellt werden. So dass alles in Allem aufgrund des verbesserten Spanbruchs, des verbesserten Späneabtransports, der höheren Werkzeugstandzeit, der Verkürzung der Fertigungszeiten, der Verkürzung der Durchlaufzeiten und der damit einhergehenden Kostensenkung die Produktivität deutlich gesteigert werden kann.

Offenbart ist eine Spindelanordnung mit einem Aktuator zur Schwingungsanregung eines von der Spindelanordnung getragenen Werkzeugs. Mittels einer Ausgleichseinrichtung erfolgt ein aktiver Impulsausgleich.

### Bezugszeichenliste:

- 1: Spindelanordnung
- 2: Spindel
- 4: Werkzeugaufnahme
- 6: Werkzeug
- 8: Rotor
- 10: Membranlager
- 12: Luftlager
- 14: Spindelgehäuse
- 16: Befestigungselement
- 18: Maschinenstruktur
- 20: Aktuator
- 22: Kolben
- 24: Zylindergehäuse
- 26: Druckraum
- 28: Druckraum
- 30: Ausgleichseinrichtung
- 32: Ausgleichsmasse
- 34: Ausgleichskolben
- 36: Druckraum
- 38: Druckraum
- 40: Ausgleichslager
- 42: Gehäuse
- 44: weiterer Aktuator
- 46: Membranlager
- 48: Stirnflansch
- 50: Antriebsgestänge
- 52: Flansch
- 54: weiteres Membranlager
- 56: Übertragungsstrebe
- 58: Lagerbock
- 60: Lagerbock
- 62: Umhausung
- 64: Führungsring
- 66: Spindelflansch
- 68: Befestigungsring
- 70: Befestigungsring
- 72: Befestigungsring
- 76: Befestigungsflansch
- 78: Befestigungsflansch
- 80: Kolbenstange
- 82: Innenring
- 84: Klemmring
- 86: Außenring
- 87: Konsole
- 88: Klemmschraube
- 90: Ausnehmung

## Patentansprüche

1. Spindelanordnung für eine Werkzeugmaschine mit einer Spindel (2) zum Antreiben eines Werkzeugs (6) und mit einem Aktuator (20) zur Schwingungsanregung des Werkzeugs (6), wobei die Spindelanordnung mit einer Ausgleichseinrichtung (30) zur zumindest teilweisen Kompensation der durch die Schwingungsanregung erzeugten Trägheitskräfte im Spindelbereich ausgeführt ist, wobei der Aktuator (20) eine Ausgleichsmasse (32) antreibt, **dadurch gekennzeichnet, dass** eine weitere Ausgleichsmasse die Spindel (2) umgreift und über zumindest einen weiteren Aktuator (44) angetrieben ist.

2. Spindelanordnung nach Patentanspruch 1, wobei die Ausgleichseinrichtung (30) die Ausgleichsmasse (32) hat, die gegengleich zur auf das Werkzeug (6) übertragenen Schwingung angetrieben ist.

3. Spindelanordnung nach Patentanspruch 2, wobei die Schwingmassen der Spindel (2) und der Ausgleichsmasse (32), die Frequenz sowie die Schwingungsamplitude so gewählt sind, dass sich die gegenläufig wirkenden Trägheitskräfte im Wesentlichen aufheben.

4. Spindelanordnung nach einem der vorhergehenden Patentansprüche, wobei die Schwingungsfrequenz weniger als 1 kHz, vorzugsweise etwa 200 Hz beträgt.

5. Spindelanordnung nach einem der vorhergehenden Patentansprüche, wobei die Schwingungsamplitude im Bereich von 0,05 mm bis 1 mm, vorzugsweise im Bereich von 0,1 mm bis 0,5 mm liegt.

6. Spindelanordnung nach einem der vorhergehenden Patentansprüche, wobei die Schwingungsanregung über den Aktuator (20, 44) oder eine Aktuatoranordnung in zwei oder drei Achsen (x, y, z) erfolgt.

7. Spindelanordnung nach Anspruch 1, wobei die weitere Ausgleichsmasse über zwei diametral angeordnete Aktuatoren (44) angetrieben ist.

8. Spindelanordnung nach einem der vorhergehenden Patentansprüche, wobei die Spindel (2) oder ein Rotor (8) der Spindel (2) über zwei die Schwingung ermöglichende Lager (10, 12; 46) abgestützt ist.

9. Spindelanordnung nach Patentanspruch 8, mit einem zusätzlichen Lager (54) im Ankoppelbereich der Spindel (2) bzw. des Rotors (8) an den Aktuator (20).

10. Spindelanordnung nach Patentanspruch 8 oder 9, wobei die Lager Luftlager (12) oder Festkörperelemente, insbesondere Membranlager (10, 46, 54) sind.

11. Spindelanordnung nach einem der Patentansprüche 8 bis 10, wobei der Aktuator (20, 44) oder die Aktuatoranordnung und/oder die Ausgleichseinrichtung (30) in ein Spindelgehäuse (14) der Spindel (2) integriert sind.

12. Spindelanordnung nach einem der Patentansprüche 8 bis 11, mit einem Antriebsgestänge (50) zur Schwingungsübertragung zwischen Aktuator (20) und Spindel (2).

13. Spindelanordnung nach einem der vorhergehenden Patentansprüche, wobei die Auslegung der zur Schwingung angeregten Bauelemente und die Wahl der Schwingungsparameter derart erfolgen, dass das Gesamtspindelsystem in einer definierten Eigenfrequenz schwingt.

14. Spindelanordnung nach einem der vorhergehenden Patentansprüche, wobei der oder die Aktuatoren (20, 44) hydraulisch, mechanisch oder elektromechanisch angetrieben sind.

## Claims

1. A spindle arrangement for a machine tool, comprising a spindle (2) for driving a tool (6) and comprising an actuator (20) for exciting vibration of the tool (6), wherein the spindle arrangement is provided with a compensation device (30) for at least partly compensating the inertia forces produced by the vibration excitation in the spindle region, wherein the actuator (20) drives a compensation mass (32), **characterized in that** a further compensation mass encompasses the spindle (2) and is driven by at least one further actuator (44).

2. The spindle arrangement according to claim 1, wherein the compensation device (30) has the compensation mass (32) driven mirror-invertedly to the vibration transferred to the tool (6).

3. The spindle arrangement according to claim 2, wherein the vibration masses of the spindle (2) and of the compensation mass (32), the frequency, and the vibration amplitude are chosen such that the counter-acting inertia forces substantially neutralize themselves.

4. The spindle arrangement according to one of the preceding claims, wherein the vibration frequency is less than 1 kHz, preferably approximately 200 Hz.

5. The spindle arrangement according to one of the preceding claims, wherein the vibration amplitude lies in the range of 0.05 mm to 1 mm, preferably in the range of 0.1 mm to 0.5 mm.

6. The spindle arrangement according to one of the preceding claims, wherein the vibration excitation is performed via the actuator (20, 44) or an actuator arrangement in two or three axes (x, y, z).

7. The spindle arrangement according to claim 1, wherein the further compensation mass is driven by two diametrically arranged actuators (44).

8. The spindle arrangement according to one of the preceding claims, wherein the spindle (2) or a rotor (8) of the spindle (2) is supported by two bearings (10, 12, 46) enabling the vibration.

9. The spindle arrangement according to claim 8, comprising an additional bearing (54) in the coupling region of the spindle (2) or the rotor (8) to the actuator (20).

10. The spindle arrangement according to claim 8 or 9, wherein the bearings are air bearings (12) or solid body elements, especially membrane bearings (10, 46, 54).

11. The spindle arrangement according to one of claims 8 to 10, wherein the actuator (20, 44) or the actuator arrangement and/or the compensation device (30) are integrated in a spindle housing (14) of the spindle (2).

12. The spindle arrangement according to one of claims 8 to 11, comprising drive rods (50) for vibration transfer between the actuator (20) and the spindle (2).

13. The spindle arrangement according to one of the preceding claims, wherein the design of the components excited to vibrate and the choice of the vibration parameters are such that the entire spindle system vibrates at a defined natural frequency.

14. The spindle arrangement according to one of the preceding claims, wherein the actuator(s) (20, 44) is/are driven hydraulically, mechanically, or electromechanically.

## Revendications

1. Agencement de broche pour une machine-outil avec une broche (2) pour l'entraînement d'un outil (6) et avec un actionneur (20) pour l'excitation d'oscillation de l'outil (6), dans lequel l'agencement de broche est réalisé avec un dispositif d'équilibrage (30) pour la compensation au moins partielle des forces d'inertie générées par l'excitation d'oscillation dans la zone de broche, dans lequel l'actionneur (20) entraîne une masse d'équilibrage (32), **caractérisé en ce qu'**une masse d'équilibrage supplémentaire entoure la broche (2) et est entraînée par au moins un actionneur supplémentaire (44).

2. Agencement de broche selon la revendication 1, dans lequel le dispositif d'équilibrage (30) présente la masse d'équilibrage (32) qui est entraînée dans la direction opposée à l'oscillation transmise à l'outil (6).

3. Agencement de broche selon la revendication 2, dans lequel les masses oscillantes de la broche (2) et de la masse d'équilibrage (32), la fréquence ainsi que l'amplitude d'oscillation sont sélectionnées de sorte que les forces d'inertie agissant dans des directions opposées s'annulent sensiblement.

4. Agencement de broche selon l'une quelconque des revendications précédentes, dans lequel la fréquence d'oscillation est inférieure à 1 kHz, de préférence environ 200 Hz.

5. Agencement de broche selon l'une quelconque des revendications précédentes, dans lequel l'amplitude d'oscillation est dans la plage de 0,05 mm à 1 mm, de préférence dans la plage de 0,1 mm à 0,5 mm.

6. Agencement de broche selon l'une quelconque des revendications précédentes, dans lequel l'excitation d'oscillation s'effectue par l'intermédiaire de l'actionneur (20, 44) ou d'un agencement d'actionneur dans deux ou trois axes (x, y, z).

7. Agencement de broche selon la revendication 1, dans lequel la masse d'équilibrage supplémentaire est entraînée par deux actionneurs (44) disposés diamétralement.

8. Agencement de broche selon l'une quelconque des revendications précédentes, dans lequel la broche (2) ou un rotor (8) de la broche (2) est supporté par deux paliers (10, 12 ; 46) permettant l'oscillation.

9. Agencement de broche selon la revendication 8, avec un palier supplémentaire (54) dans la zone d'accouplement de la broche (2) ou du rotor (8) à l'actionneur (20).

10. Agencement de broche selon la revendication 8 ou 9, dans lequel les paliers sont des paliers à air (12) ou des éléments à l'état solide, en particulier des paliers à membrane (10, 46, 54).

11. Agencement de broche selon l'une quelconque des revendications 8 à 10, dans lequel l'actionneur (20, 44) ou l'agencement d'actionneur et/ou le dispositif d'équilibrage (30) sont intégrés dans un boîtier de broche (14) de la broche (2).

12. Agencement de broche selon l'une quelconque des revendications 8 à 11, avec une tringle de commande (50) pour la transmission d'oscillation entre l'actionneur (20) et la broche (2).

13. Agencement de broche selon l'une quelconque des revendications précédentes, dans lequel la conception des composants excités à l'oscillation et le choix des paramètres d'oscillation sont effectués de sorte que l'ensemble du système de broche oscille à une fréquence propre définie.

14. Agencement de broche selon l'une quelconque des revendications précédentes, dans lequel le ou les actionneurs (20, 44) sont entraînés hydrauliquement, mécaniquement ou électromécaniquement.
